# FASCICULE DE BREVET EUROPEEN

(11) **EP 3 064 347 B1**
(45) Date de publication et mention de la délivrance du brevet: **12.05.2021**
(21) Numéro de dépôt: 16157483.5
(22) Date de dépôt: 25.02.2016
(51) Int. Cl.: B32B 5/02, B32B 27/08, B32B 27/12, B32B 27/30, B32B 27/36, B32B 27/40, E04F 15/16

(54) **REVÊTEMENT DE SOL MULTICOUCHE**
MEHRSCHICHTIGES BODENBELAG
MULTILAYER FLOOR COVERING

(30) Priorité: 06.03.2015 FR 1551924
(43) Date de publication de la demande: 07.09.2016
(73) Titulaire: GERFLOR, 69100 Villeurbanne (FR)
(72) Inventeur: CINAUSERO, Nicolas, 69660 COLLONGES-AU-MONT-D'OR (FR); GILLOT, Thomas, 69002 LYON (FR)
(74) Mandataire: Cabinet Laurent & Charras

(56) Documents cités:
- EP-A1- 2 182 135
- US-A1- 2010 227 132

## Description

### DOMAINE DE L'INVENTION

La présente invention concerne un multicouche destiné à être utilisé en tant que revêtement de sol notamment pour des véhicules de transport de personnes, par exemple dans le domaine de l'aéronautique.

### ETAT ANTERIEUR DE LA TECHNIQUE

Dans des domaines tels que l'aéronautique, les industriels sont constamment à la recherche de nouveaux matériaux permettant de réduire les coûts.

A titre d'exemple, il peut s'agir de l'optimisation du fonctionnement d'un avion par mise au point et utilisation de nouveaux matériaux qui présentent des propriétés physiques satisfaisantes tout en étant plus légers que les matériaux conventionnels. Il s'ensuit une baisse de la consommation en carburant et donc un moindre coût de fonctionnement d'un avion.

Comme ce type d'améliorations peut concerner toute sorte de pièce, une attention particulière a été portée sur les revêtements de sol.

De manière générale, un revêtement de sol est constitué d'une pluralité de couches assemblées entre elles. En particulier, un revêtement de sol aéronautique peut être constitué d'une couche de renfort qui assure la rigidité du produit. Cette propriété de rigidité constitue un critère important dans l'industrie aéronautique. En outre, une couche de surface apporte notamment des propriétés de résistance à l'usure, à l'abrasion ou à la glissance. La couche de surface peut également avoir pour fonction de protéger une éventuelle couche d'impression sur laquelle peuvent être imprimés des motifs.

Dans un revêtement de sol, un certain niveau de rigidité est généralement requis afin de limiter les déformations inesthétiques des revêtements de sol qui peuvent se produire en vol (effet de flambage ou « waving », formation de bulles d'air occlus sous le revêtement ou « bubbling »). Par ailleurs, un revêtement de sol rigide limite également le telegraphing, phénomène indépendant du domaine d'application, qui se traduit par la transmission des irrégularités du substrat sur le revêtement de sol.

La rigidité des revêtements conventionnels peut être optimisée par l'utilisation de deux couches superposées en fibres de renfort imprégnées de résine. A titre d'exemple, le document US 2010/0227132 décrit un revêtement de sol ayant deux couches de renfort en fibres. Cependant, ces couches de renfort alourdissent de manière non négligeable le revêtement de sol en raison notamment de la présence de fibres de renfort, par exemples des fibres de verre.

En outre, l'éventuelle incompatibilité de la résine utilisée dans ces couches renfort avec les autres couches du produit nécessite souvent la présence de couches intermédiaires adhésives ou de couches primaires assurant l'interface. Ces couches supplémentaires peuvent non seulement alourdir le multicouche mais aussi complexifier son mode de fabrication. En effet, le procédé d'assemblage des couches constitutives d'un revêtement de sol synthétique représente une part importante du coût de fabrication global d'un produit, et notamment le nombre de couches assemblées et la présence d'adhésifs ou de primaires nécessaires pour assurer l'adhésion entre les différentes couches de nature chimique différente.

Quand bien même ce type de revêtement de sol est adapté au domaine de l'aéronautique, il existe néanmoins un besoin d'améliorer ses caractéristiques notamment son poids, tout en maintenant une rigidité satisfaisante.

Le Demandeur a mis au point un revêtement de sol multicouche permettant de résoudre ce problème technique. Ce multicouche présente des propriétés de rigidité permettant de limiter les déformations indésirables du revêtement de sol par flambage, par la présence de bulles d'air occlus ou encore par telegraphing (transmission des irrégularités du sol).

### EXPOSE DE L'INVENTION

La présente invention concerne un revêtement de sol multicouche contenant deux couches de renfort dont l'une d'entre elles est dépourvue de fibres de renfort.

De manière avantageuse, ce multicouche présente une masse surfacique (grammage) inférieure à celle des revêtements conventionnels tout en offrant une rigidité suffisante pour des applications dans les domaines techniques de l'aéronautique.

Plus précisément, la présente invention a pour objet un revêtement de sol multicouche comprenant :
- une couche A de renfort fibreux ;
- une couche d'adhésif B ;
- une couche intermédiaire C ;
- une couche de renfort D, dépourvue de fibres de renfort, et en polymère thermoplastique choisi dans le groupe comprenant les résines polyesters ; les résines acryliques ; et leurs mélanges ;
- une couche E de surface ,la couche A étant solidaire de la couche C grâce à la couche d'adhésif B.

De manière avantageuse, dans ce multicouche, la couche de renfort D présente une épaisseur comprise entre 0,07 mm et 0,40 mm, et avantageusement une masse surfacique comprise entre 50 et 500 g/m².

Il s'agit d'un multicouche comprenant un laminé composite (couche A de renfort fibreux) et un complexe de surface polymérique (couches C,D,E).

De manière avantageuse, le multicouche comprend successivement les couches A, B, C, D et E.

De manière générale, une couche comprend deux faces principales correspondant à une face supérieure et à une face inférieure.

La couche A de renfort correspond à la couche inférieure du multicouche. Elle est destinée à être en contact avec le sol sur lequel le revêtement est installé. Il peut ainsi reposer sur le panneau de plancher d'un avion, l'interface couche A/plancher pouvant être assurée par l'intermédiaire d'un adhésif.

Il s'agit d'une couche comprenant des fibres pouvant être tissées ou non-tissées.

La couche A peut être composée d'un matériau composite comprenant des fibres de renfort tissées ou non-tissées et d'une résine polymère thermodurcissable ou thermoplastique.

De manière avantageuse, la couche A comprend, en poids par rapport au poids de ladite couche A :
- 20 à 80% de fibres de renfort, plus avantageusement 45 à 60 % ;
- 20 à 80% de résine polymère, plus avantageusement 40 à 55%.

Les fibres de renfort participent à la rigidification de la couche A. Elles peuvent être minérales ou organiques. Il peut notamment s'agir de fibres naturelles ou synthétiques apportant du renfort dans un matériau. Il s'agit préférentiellement de fibres de matériau choisi dans le groupe comprenant le verre ; le carbone ; l'aramide ; le lin ; et le chanvre.

La résine polymère de la couche A peut notamment être en polymère thermodurcissable ou thermoplastique choisi dans le groupe comprenant la résine polyester ; la résine phénolique ; la résine époxy ; le polysulfone ; la résine vinylester ; la résine époxy-acrylique ; et leurs mélanges.

Les fibres de renfort de la couche A peuvent se présenter sous la forme de fibres tissées ou de fibres non-tissées.

Selon un mode de réalisation particulier, la couche A peut être constituée de fibres de verre tissées enduites dans une résine polymère thermodurcissable.

La masse surfacique de la couche A peut notamment être comprise entre 200 et 1200 g/m², plus avantageusement entre 300 et 600 g/m².

D'autre part, la couche A présente une épaisseur avantageusement comprise entre 0,05 et 1,5 millimètres, plus avantageusement entre 0,2 et 0,4 millimètres.

La couche A est destinée à être en contact avec le plancher, par exemple d'un avion, sur lequel est déposé le multicouche. Elle est rendue solidaire de la couche C grâce à la couche B d'adhésif.

Typiquement, la couche B d'adhésif peut notamment être en polymère choisi dans le groupe comprenant les copolyamides (CoPA) ; le polyuréthane thermoplastique (TPU) ; l'éthylène-acétate de vinyle (EVA) ; les copolyesters ; et leurs mélanges.

La masse surfacique de la couche B peut notamment être comprise entre 10 et 140 g/m², plus avantageusement entre 40 et 100 g/m².

D'autre part, la couche B présente une épaisseur avantageusement comprise entre 0,02 et 0,50 millimètres, plus avantageusement entre 0,04 et 0,12 millimètres.

Comme déjà indiqué, la couche B permet d'assurer l'association des couches A et C. En effet, les résines ou polymères des couches A et C sont souvent peu compatibles, car la résine polymère de la couche A, préférentiellement choisie dans le groupe des résines thermodurcissables, est généralement peu compatible avec les composants de la couche C avantageusement thermoplastiques.

De manière générale, la couche C apporte de l'épaisseur au revêtement de sol. Elle permet notamment d'assurer une bonne soudabilité sur les bords du revêtement. C'est notamment le cas lorsque des joints sont appliqués en lisière de produit pour assurer l'étanchéité du revêtement de sol en bordure. Cette étanchéité peut être réalisée par soudabilité à chaud à l'aide d'un cordon de soudure, ou par utilisation de mastics. La bonne tenue mécanique du joint peut dépendre non seulement des matériaux utilisés mais aussi de la surface de contact, donc notamment de l'épaisseur du produit. Enfin, la couche C permet d'apporter de l'opacité lorsqu'une couche imprimée est assemblée par-dessus.

La couche C, dite « couche intermédiaire » ou « couche d'envers », est avantageusement en polymère choisi dans le groupe comprenant le polychlorure de vinyle ; le copolymère éthylène acétate de vinyle ; et leurs mélanges.

De manière avantageuse, la couche C est en polychlorure de vinyle (PVC).

De manière avantageuse, la couche C ne comprend pas de polyuréthane ou de polyuréthane thermoplastique.

La masse surfacique de la couche C peut notamment être comprise entre 300 et 1300 g/m², plus avantageusement entre 600 et 1000 g/m².

La couche C présente une épaisseur avantageusement comprise entre 0,10 et 0,60 millimètres, plus avantageusement entre 0,30 et 0,55 millimètres.

La couche C est positionnée entre la couche B et la couche D, cette dernière constituant un deuxième renfort.

Comme déjà indiqué, le multicouche selon l'invention se distingue des multicouches de l'art antérieur en ce que la couche de renfort D est dépourvue de fibres de renfort. La couche de renfort D est en polymère thermoplastique choisi dans le groupe comprenant les résines polyesters par exemple le polyéthylène téréphtalate (PET) ou le polyéthylène téréphtalate glycolisé (PETG) ; les résines acryliques par exemple le poly méthacrylate de méthyle ou le poly acrylate de méthyle ; et leurs mélanges.

Elle comprend avantageusement du PET et/ou du PETG. Le PETG est un polymère copolyester amorphe présentant une structure chimique différente du PET. De manière générale, le PETG a de meilleures propriétés de transformation comme par exemple la thermoformabilité.

La couche de renfort D peut également constituer un support pour l'impression d'un motif, ou d'un décor par exemple. La couche D est alors également une couche d'impression. Ainsi, le multicouche peut présenter un motif imprimé sur la couche D.

Lorsque la couche D est également une couche d'impression, le motif ou décor est imprimé sur la face supérieure de la couche D, c'est-à-dire la face de la couche D qui est au regard de la couche E. La couche D comprend alors un motif imprimé sur sa face au regard de la couche E.

La masse surfacique de la couche D peut notamment être comprise entre 50 et 500 g/m², plus avantageusement entre 100 et 300 g/m².

D'autre part, la couche D présente une épaisseur avantageusement comprise entre 0,07 et 0,40 millimètres, plus avantageusement entre 0,10 et 0,20 millimètres.

La couche de renfort D présente des caractéristiques spécifiques permettant de réduire le nombre de couches constituants le multicouche tout en assurant une rigidité suffisante.

En effet, l'intégration d'une couche de renfort D, dépourvue de fibres de renfort, permet de s'affranchir non seulement d'une seconde couche d'adhésif assurant son adhésion avec la couche C d'envers mais aussi d'une éventuelle couche d'impression étant donné que la couche D peut également jouer le rôle de couche d'impression. Il en résulte une diminution de la masse surfacique globale du multicouche.

Ce multicouche peut ainsi présenter une masse surfacique inférieure aux revêtements conventionnels tout en ayant la rigidité nécessaire pour des applications de revêtements de sol aéronautiques.

Selon un mode de réalisation particulier, la couche C peut également comprendre des charges, notamment des charges inorganiques, par exemple des argiles, de la silice, du carbonate de calcium, des hydroxydes métalliques (notamment les hydroxydes d'aluminium ou de magnésium) ou des oxydes métalliques (notamment l'oxyde de magnésium ou l'oxyde de zinc).

Ces charges peuvent représenter 30 à 80 % en poids, par rapport au poids de la couche C, avantageusement 50 à 70% en poids, alternativement 40 à 60% en poids.

Selon un autre mode de réalisation particulier, la couche C peut être le résultat d'un assemblage de deux couches obtenues à partir d'un même polymère, l'une des deux couches contenant plus de charges inorganiques que l'autre afin de diminuer le coût du produit final.

A titre d'exemple, la couche C peut être obtenue par l'assemblage d'une première couche comprenant entre 40 et 60% de charges inorganiques en poids et une seconde couche comprenant entre 20 et 40% de charges inorganiques en poids, les charges représentant 30 à 80 % en poids, par rapport au poids de la couche C obtenue, avantageusement 50 à 70% en poids, alternativement 40 à 60% en poids.

Selon un autre mode de réalisation particulier, la couche C peut comprendre un additif, tel qu'un plastifiant ; un ignifugeant comme le trihydroxyde d'aluminium ; ou des pigments.

A titre d'exemple, le plastifiant peut être un plastifiant de type phosphate ester. Il peut notamment être choisi dans le groupe comprenant le DIDP (phtalate diisodécylique), le DINP (diisononyl phthalate) ou les plastifiants esters de phosphate.

Cet additif de la couche C peut représenter 10 à 30 % en poids, par rapport au poids de la couche C, avantageusement 12 à 18% en poids.

La couche D peut également contenir des pigments, notamment du TiO₂ par exemple dans le cas d'un film blanc pouvant être imprimé.

Avantageusement, la couche de renfort D est composée de polymères ayant un module d'élasticité en flexion compris entre 1500 et 3500 MPa, plus avantageusement entre 2000 et 3200 MPa. Ce module est avantageusement mesuré selon la norme ISO 178.

Finalement, le multicouche selon l'invention comprend une couche E de surface avantageusement positionnée sur la couche D. Il s'agit d'une couche d'usure ayant des propriétés de résistance aux tâches, de résistance à la glissance, et de résistance à l'abrasion notamment.

En pratique, la couche E de surface comprend un polymère choisi dans le groupe comprenant le polyuréthane thermoplastique ; le poly(chlorure de vinyle) ; et leurs mélanges.

Préférentiellement, la couche E de surface comprend du polyuréthane thermoplastique.

La masse surfacique de la couche E peut notamment être comprise entre 150 et 600 g/m², plus avantageusement entre 200 et 400 g/m².

D'autre part, la couche E présente une épaisseur avantageusement comprise entre 0,1 et 0,70 millimètres, plus avantageusement entre 0,20 et 0,45 millimètres.

La couche E peut également comprendre des charges, des ignifugeants et des pigments de manière à définir un motif ou décor pouvant être uniforme ou non. En revanche, lorsque la couche D est également une couche d'impression, la couche E est transparente.

La couche de renfort E peut également constituer un support pour l'impression d'un motif, ou d'un décor par exemple. La couche E est alors également une couche d'impression. Ainsi, le multicouche peut présenter un motif imprimé sur la couche E.

Lorsque la couche E est également une couche d'impression, le motif ou décor est imprimé sur la face inférieure de la couche E, c'est-à-dire la face de la couche E qui est au regard de la couche D. La couche E comprend alors un motif imprimé sur sa face au regard de la couche D.

De manière avantageuse, la couche E comprend entre 10 et 20 % en poids d'ignifugeant, notamment une résine phosphonate.

Selon un autre mode de réalisation particulier, le multicouche selon l'invention peut comprendre un vernis de surface, positionné sur la couche E. Cette couche de protection optionnelle peut permettre d'améliorer les propriétés de résistance à la rayure du produit, ou de résistance aux tâches par exemple. En outre, elle peut également apporter un aspect de surface plus mat au produit, qui peut être recherché dans certains domaines d'application. Elle peut notamment être à base de polyuréthane ou d'acrylique ou de leurs mélanges ; et avantageusement présenter une masse comprise entre 5 et 50 g/m².

Selon un autre mode de réalisation particulier, le multicouche selon l'invention peut comprendre au moins une couche supplémentaire, dépourvue de fibres de renfort.

De manière avantageuse, le multicouche selon l'invention présente une masse surfacique inférieure ou égale à 2,3kg/m², plus avantageusement comprise entre 1500 et 2200 g/m², et encore plus avantageusement entre 1800 et 2000 g/m².

De manière avantageuse, le multicouche selon l'invention présente une épaisseur inférieure à 3,7mm, plus avantageusement comprise entre 1 et 2,5mm, et encore plus avantageusement entre 1,3 et 1,6mm, notamment de l'ordre de 1,4mm.

Selon un mode de réalisation avantageux, le multicouche selon l'invention comprend au moins une des couches suivantes :
- une couche A en polyester et en fibres de verre avantageusement tissées ;
- un adhésif B en polyuréthane thermoplastique ;
- une couche C en polychlorure de vinyle (PVC), comprenant avantageusement au moins des charges et/ou un agent ignifugeant ;
- une couche D en PETG et/ou en PET;
- une couche E en polyuréthane thermoplastique, comprenant avantageusement au moins un additif tel qu'un agent ignifugeant.

Selon un mode de réalisation avantageux, le multicouche selon l'invention comprend au moins une des couches suivantes :
- une couche A en résine phénolique et en fibres de verre avantageusement tissées ;
- une couche B d'adhésif en copolyamide (CoPA) ;
- une couche C en polychlorure de vinyle (PVC), comprenant avantageusement au moins des charges et/ou un agent ignifugeant ;
- une couche D en PETG et/ou en PET;
- une couche E en polyuréthane thermoplastique, comprenant avantageusement au moins un additif tel qu'un agent ignifugeant.

Selon un autre mode de réalisation particulier, le multicouche selon l'invention est constituée des couches A, B, C, D et E. En d'autres termes et selon ce mode de réalisation, il ne comprend pas d'autres couches. Dans ce cas, il peut néanmoins comprendre un vernis recouvrant la couche E.

La présente invention concerne également un procédé de fabrication de ce multicouche. Il comprend notamment les étapes suivantes :
- fabrication des couches A à E ;
- assemblage des couches A à E.

A titre d'exemple, la couche B peut être fabriquée par un procédé d'extrusion soufflage. La couche C peut être fabriquée par calandrage notamment lorsqu'elle est en PVC. La couche E peut être fabriquée par des moyens de transformation conventionnels des thermoplastiques c'est-à-dire par extrusion - calandrage, par extrusion - soufflage ou encore par calandrage.

Les couches A à E sont avantageusement assemblées par superposition sous l'action de l'élévation de la température et de la pression par des procédés classiques de complexage, comme la lamination par thermo-doublage, où se succèdent des étapes de chauffage et de pressage. Afin de donner une structure de surface en phase finale, le multicouche peut subir une étape de grainage.

Le complexage consiste à passer des couches pré-chauffées en température, entre deux rouleaux régulés en température qui exercent une pression. Ces rouleaux assurent l'association des couches.

L'épaisseur du multicouche ne correspond pas nécessairement à la somme des épaisseurs des couches en raison des étapes d'association et de post-traitement : pressage et éventuel grainage par exemple.

De manière avantageuse, les températures de lamination sont comprises entre 100 et 160°C. A titre d'exemple, la pression exercée peut varier de 8 à 20bar, préférentiellement de 10 à 15bar.

En pratique, la couche de renfort D présente une bonne compatibilité avec la couche C d'envers. Ainsi, lors de l'assemblage des couches A à E, il n'est pas nécessaire d'intercaler une couche supplémentaire adhésive, ou d'appliquer un primaire spécifique entre la couche de renfort D et la couche C d'envers, ce qui facilite la fabrication du produit.

Au contraire, les multicouches de l'art antérieur comprenant deux renfort en fibres peuvent nécessiter des couches adhésives ou des primaires supplémentaires pour assurer l'adhésion du deuxième renfort.

En outre, le PETG a des caractéristiques proches de celles du PVC. Il est notamment facilement thermo-formable ce qui permet de faciliter l'étape d'assemblage des couches constituants le multicouche lorsque les couches C et D sont respectivement en PETG et PVC. La masse totale du multicouche est ainsi réduite.

En résumé, la présente invention permet de :
- diminuer le nombre d'étapes du procédé de fabrication ;
- diminuer la masse surfacique en réduisant le nombre de couches nécessaires ;
- diminuer la masse surfacique en mettant en œuvre un deuxième renfort moins lourd que les renforts conventionnels en fibres ;
- diminuer la masse surfacique en mettant en œuvre une couche à double fonction renfort/support d'impression.

Au regard de ses propriétés, le multicouche selon l'invention est plus particulièrement attractif pour des applications pour lesquelles la masse surfacique du revêtement est primordiale, comme le domaine de l'aéronautique.

L'invention et les avantages qui en découlent ressortiront mieux des figures et exemples donnés afin d'illustrer l'invention et non de manière limitative.

### FIGURES

La figure 1 représente la vue en coupe du multicouche selon un mode de réalisation particulier de l'invention.
La figure 2 représente le test permettant de mesurer les paramètres de flexion du multicouche selon l'invention.

### EXEMPLES DE REALISATION DE L'INVENTION

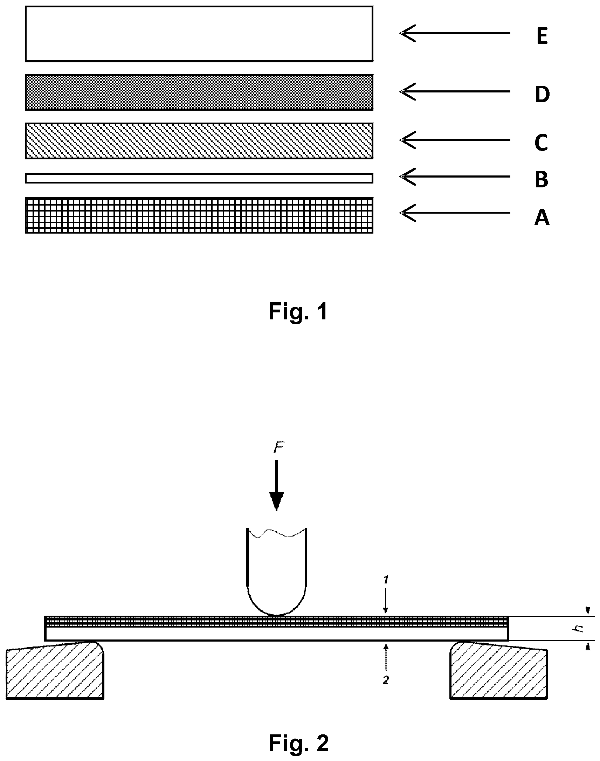

Les trois multicouches suivants ont été préparés :
- CE-1 : produit standard : multicouche comprenant une couche de renfort contenant des fibres de renfort. Ce multicouche est composé de :
   o une couche composite de renfort en polyester renforcé de fibres de verre de 540g/m² et de 0,35mm d'épaisseur ;
   o une couche adhésive en TPU de 90g/m² et de 0,08mm d'épaisseur ;
   o deux couches superficielles en PVC ayant une épaisseur de 0,55mm chacune et une masse surfacique de 655g/m² chacune.
- CE-2 : produit standard : multicouche comprenant deux couches de renfort contenant des fibres de renfort. Ce multicouche est composé de :
   o une couche composite de renfort en polyester renforcé de fibres de verre de 540g/m² et de 0,35mm d'épaisseur ;
   ∘ un adhésif en TPU de 90g/m² et de 0,08mm d'épaisseur ;
   o une deuxième couche de renfort composé de fibres de verre de 220 g/m² ayant une épaisseur de 0,20mm.
   o une deuxième couche adhésive de 50g/m² ayant une épaisseur de 0,03mm.
   o deux couches superficielles en PVC ayant une épaisseur de 0,50mm chacune et une masse surfacique de 570g/m² chacune.
- INV-1 : multicouche selon l'invention comprenant une couche de renfort fibreuse (A) et une couche de renfort dépourvue de fibres de renfort (D). Ce multicouche (figure 1) est composé de :
   ∘ une couche A en polyester renforcé de fibres de verre de 540 g/m² et de 0,33mm d'épaisseur ;
   ∘ une couche B en TPU de 90 g/m² et de 0,08mm d'épaisseur :
   ∘ une couche C en PVC de 740 g/m² et 0,42mm d'épaisseur ;
   ∘ une couche D en PETG de 170 g/m² et de 0,13mm d'épaisseur ;
   ∘ une couche E en TPU de 360 g/m² et 0,30mm d'épaisseur.
- INV-2 : multicouche selon l'invention comprenant une couche de renfort fibreuse (A) et une couche de renfort dépourvue de fibres de renfort (D). Ce multicouche est composé de :
   ∘ une couche A en résine phénolique renforcée de fibres de verre de 470 g/m² et de 0,30mm d'épaisseur ;
   o une couche B d'adhésif en copolyamide (CoPA) de 50 g/m² et de 0,05mm d'épaisseur :
      ∘ une couche C en PVC de 740 g/m² et 0,42mm d'épaisseur ;
      ∘ une couche D en PETG de 170 g/m² et de 0,13mm d'épaisseur ;
      ∘ une couche E en TPU de 360 g/m² et 0,30mm d'épaisseur.

L'épaisseur du multicouche ne correspond pas nécessairement à la somme des épaisseurs des couches en raison des étapes d'association et de post-traitement : pressage + éventuel grainage.

**Tableau 1 : composition et propriétés des trois multicouches préparés**

| | masse surfacique du multicouche (g/m²) | épaisseur du multicouche (mm) | paramètre de rigidité Ef.h³ (MPa) |
|---|---|---|---|
| CE-1 | 1940 | 1,55 | L : 615 / T : 570 |
| CE-2 | 2040 | 1,65 | L : 2020 / T : 1960 |
| INV-1 | 1900 | 1,40 | L : 2670 / T : 2180 |
| INV-2 | 1800 | 1,30 | L : 2373 / T : 1705 |

| | | | |
|---|---|---|---|
| INV multicouche selon l'invention CE contre-exemple L : paramètre de flexion dans le sens longueur T : paramètre de flexion dans le sens travers | | | |

Les paramètres de flexion dans le sens longueur et dans le sens travers sont différents en raison de la présence du renfort en fibres.

Les paramètres de flexion sont mesurés selon les techniques conventionnelles connues de l'homme du métier, et définies par la norme ISO 178. Il s'agit d'un test de flexion trois points en positionnant le multicouche avec la face inférieur du produit positionné vers le haut (face 1) et la surface du produit positionné vers le bas (face 2) (voir la figure 2). Les conditions de mesure sont conformes aux critères de la norme ISO 178, avec comme compléments et restrictions des dimensions d'éprouvette de 100mm x 25mm, et le paramètre h qui correspond à l'épaisseur du multicouche, et vitesse de l'essai est de 1mm/min.

Le paramètre de flexion mesuré (en N/mm) traduisant le niveau de rigidité du produit, Ef x h³, dépend du module d'élasticité en flexion Ef et de l'épaisseur h de l'échantillon.

De manière générale, un paramètre Ef x h³ supérieur à 1500 N.mm présente des propriétés de rigidité suffisantes pour une application dans l'aéronautique.

Le tableau 1 montre que les multitouches INV-1, INV-2 et selon l'invention présente un paramètre de flexion supérieur aux multicouches comprenant un CE-1 et CE-2 qui comprennent respectivement un seul renfort et deux renforts en fibres. En outre, la masse surfacique des multicouches INV-1, INV-2 est inférieure à celle de CE-1 ou CE-2.
Ces exemples illustrent les avantages que procurent la présente invention, à savoir une rigidité conforme aux standards industriels, à masse surfacique inférieure.

## Revendications

1. Revêtement de sol multicouche comprenant :
- une couche A inférieure, de renfort fibreux ;
- une couche d'adhésif B ;
- une couche intermédiaire C ;
- une couche de renfort D, dépourvue de fibres de renfort, et en polymère thermoplastique choisi dans le groupe comprenant les résines polyesters ; les résines acryliques ; et leurs mélanges ;
- une couche E de surface,
la couche A étant solidaire de la couche C grâce à la couche d'adhésif B.

2. Revêtement de sol multicouche selon la revendication 1, ***caractérisé* en ce que** la couche de renfort D présente une épaisseur comprise entre 0,07 et 0,40 mm, et une masse surfacique comprise entre 50 et 500 g/m².

3. Revêtement de sol multicouche selon la revendication 1 ou 2, ***caractérisé* en ce que** la couche A comprend, en poids par rapport au poids de la couche A :
- 20 à 80% de fibres de renfort ;
- 80 à 20 % de résine polymère.

4. Revêtement de sol multicouche selon l'une des revendications 1 à 3, ***caractérisé* en ce que** la couche C est en polymère choisi dans le groupe comprenant le polychlorure de vinyle ; le copolymère éthylène acétate de vinyle ; et leurs mélanges.

5. Revêtement de sol multicouche selon l'une des revendications 1 à 4, ***caractérisé* en ce que** la couche D comprend du PETG et/ou du PET.

6. Revêtement de sol multicouche selon l'une des revendications 1 à 5, ***caractérisé* en ce que** la couche D comprend un motif imprimé sur sa face au regard de la couche E.

7. Revêtement de sol multicouche selon l'une des revendications 1 à 6, ***caractérisé* en ce que** la couche E comprend un motif imprimé sur sa face au regard de la couche D.

8. Revêtement de sol multicouche selon l'une des revendications 1 à 7, ***caractérisé* en ce que** la couche E comprend un polymère choisi dans le groupe comprenant le polyuréthane thermoplastique ; le poly(chlorure de vinyle) ; et leurs mélanges.

9. Revêtement de sol multicouche selon l'une des revendications 1 à 8, ***caractérisé* en ce qu'**il comprend au moins une des couches suivantes :
- une couche A en polyester et en fibres de verre ;
- une couche B d'adhésif en polyuréthane thermoplastique ;
- une couche C en PVC, comprenant avantageusement au moins des charges et/ou au moins un agent ignifugeant ;
- une couche D en PETG et/ou en PET ;
- une couche E en polyuréthane thermoplastique, comprenant avantageusement au moins un agent ignifugeant.

10. Revêtement de sol multicouche selon l'une des revendications 1 à 8, ***caractérisé* en ce qu'**il comprend au moins une des couches suivantes :
- une couche A en résine phénolique et en fibres de verre ;
- une couche B d'adhésif en copolyamide ;
- une couche C en PVC, comprenant avantageusement au moins des charges et/ou au moins un agent ignifugeant ;
- une couche D en PETG et/ou en PET;
- une couche E en polyuréthane thermoplastique, comprenant avantageusement au moins un agent ignifugeant.

11. Revêtement de sol multicouche selon l'une des revendications 1 à 10, ***caractérisé* en ce qu'**il présente une épaisseur inférieure à 3,7mm.

12. Revêtement de sol multicouche selon l'une des revendications 1 à 11, ***caractérisé* en ce qu'**il présente une masse surfacique inférieure ou égale à 2,3 kg/m².

13. Procédé de fabrication du revêtement de sol multicouche objet de l'une des revendications 1 à 12, comprenant les étapes suivantes :
- fabrication des couches A à E ;
- assemblage des couches A à E.

## Patentansprüche

1. Mehrschichtiger Bodenbelag, der besteht aus:
- einer unteren Schicht A, faserverstärkt;
- einer Kleberschicht B;
- einer Zwischenschicht C
- einer Verstärkungsschicht D, ohne Verstärkungsfasern, und aus thermoplastischem Polymer aus der Gruppe umfassend die Polyesterharze; die Acrylharze; und ihre Mischungen;
- eine Oberflächenschicht E,
die Schicht A ist dabei mittels der Kleberschicht B fest mit der Schicht C verbunden.

2. Mehrschichtiger Bodenbelag nach Anspruch 1, ***dadurch gekennzeichnet, dass*** die Verstärkungsschicht D eine Dicke zwischen 0,07 und 0,40 mm und ein Flächengewicht zwischen 50 und 500 g/m aufweist.

3. Mehrschichtiger Bodenbelag nach Anspruch 1 oder 2, ***dadurch gekennzeichnet, dass*** die Schicht A nach Gewicht, bezogen auf das Gewicht der Schicht A:
- 20 bis 80% Verstärkungsfasern;
- 80 bis 20 % Polymerharz enthält.

4. Mehrschichtiger Bodenbelag nach einem der Ansprüche 1 bis 3, ***dadurch gekennzeichnet, dass*** die Schicht C aus einem Polymer besteht, das ausgewählt wird aus der Gruppe mit Polyvinylchlorid, Ethylen- Vinylacetat- Copolymer und ihren Mischungen.

5. Mehrschichtiger Bodenbelag nach einem der Ansprüche 1 bis 4, ***dadurch gekennzeichnet, dass*** die Schicht D PETG und/ oder PET enthält.

6. Mehrschichtiger Bodenbelag nach einem der Ansprüche 1 bis 5, ***dadurch gekennzeichnet, dass*** die Schicht D ein Muster enthält, das auf ihre der Schicht E gegenüberliegende Seite gedruckt ist.

7. Mehrschichtiger Bodenbelag nach Anspruch 1 bis 6, ***dadurch gekennzeichnet, dass*** die Schicht E ein Muster enthält, das auf ihre der Schicht D gegenüberliegende Seite gedruckt ist.

8. Mehrschichtiger Bodenbelag nach einem der Ansprüche 1 bis 7, ***dadurch gekennzeichnet, dass*** die Schicht E ein Polymer enthält, das ausgewählt wird aus der Gruppe mit thermoplastischem Polyurethan,, Poly(vinylchlorid) und ihren Mischungen.

9. Mehrschichtiger Bodenbelag nach einem der Ansprüche 1 bis 8, ***dadurch gekennzeichnet, dass*** er mindestens eine der folgenden Schichten enthält:
- eine Schicht A aus Polyester und Glasfasern;
- eine Kleberschicht B aus thermoplastischem Polyurethan;
- eine Schicht C aus PVC, die vorteilhafterweise mindestens Füllstoffe und/ oder ein flammhemmendes Mittel enthält;
- eine Schicht D aus PETG und/ oder aus PET ;
- eine Schicht E aus thermoplastischem Polyurethan, mit vorteilhafterweise mindestens einem flammhemmenden Mittel

10. Mehrschichtiger Bodenbelag nach einem der Ansprüche 1 bis 8, ***dadurch gekennzeichnet, dass*** er mindestens eine der folgenden Schichten enthält:
- eine Schicht A aus Phenolharz und Glasfasern;
- eine Kleberschicht B aus Copolyamid;
- eine Schicht C aus PVC, die vorteilhafterweise mindestens Füllstoffe und/ oder ein flammhemmendes Mittel enthält;
- eine Schicht D aus PETG und/ oder PET•,
- eine Schicht E aus thermoplastischem Polyurethan, mit vorteilhafterweise mindestens einem flammhemmenden Mittel.

11. Mehrschichtiger Bodenbelag nach einem der Ansprüche 1 bis 10, **dadurch gekennzeichnet, dass** er eine Dicke von weniger als 3,7 mm aufweist.

12. Mehrschichtiger Bodenbelag nach einem der Ansprüche 1 bis 11, **dadurch gekennzeichnet, dass** er ein Flächengewicht von weniger als 2,3 kg/m aufweist..

13. Verfahren zur Herstellung des mehrschichtigen Bodenbelagsnach einem der Ansprüche 1 bis 12, das die folgenden Schritte umfasst:
- Herstellung der Schichten A bis E;.
- Verbindung der Schichten A bis E.

## Claims

1. A multilayer floor covering comprising:
- a lower layer A of reinforcing fibers;
- an adhesive layer B;
- an underside layer C;
- a reinforcing layer D, free of reinforcing fibers, made of thermoplastic polymer chosen from the group comprising polyester resins, acrylic resins and mixtures thereof;
- a surface layer E,
the layer A is rendered rigidly connected to layer C by adhesive layer B.

2. The multilayer floor covering according to claim 1, ***characterized* in that** reinforcing layer D has a thickness ranging from between 0.07 mm and 0.40 mm, and a surface density ranging from between 50 and 500 g/m².

3. The multilayer floor covering according to claim 1 or 2, ***characterized* in that** layer A comprises, by weight relative to the weight of layer A:
- 20 to 80% reinforcing fibers;
- 80 to 20% polymer resin.

4. The multilayer floor covering according to one of claims 1 to 3, ***characterized* in that** layer C is a polymer selected from the group comprising polyvinylchloride, ethylenevinyl acetate copolymer and mixtures thereof.

5. The multilayer floor covering according to one of claims 1 to 4, ***characterized* in that** layer D comprises PETG and/or PET.

6. The multilayer floor covering according to one of claims 1 to 5, ***characterized* in that** layer D comprises a printed pattern on the side thereof facing layer E.

7. The multilayer floor covering according to one of claims 1 to 6, ***characterized* in that** layer E comprises a printed pattern on the side thereof facing layer D.

8. The multilayer floor covering according to one of claims 1 to 7, ***characterized* in that** layer E comprises a polymer chosen from the group comprising thermoplastic polyurethane, poly(vinylchloride) and mixtures thereof.

9. The multilayer floor covering according to one of claims 1 to 8, ***characterized* in that** it comprises at least one of the following layers:
- a layer A made of polyester and fiberglass;
- an adhesive layer B made of thermoplastic polyurethane;
- a layer C made of PVC, advantageously comprising at least some fillers and/or at least one flame retardant agent;
- a layer D made of PETG and/or PET;
- a layer E made of thermoplastic polyurethane, advantageously comprising at least one flame retardant agent.

10. The multilayer floor covering according to one of claims 1 to 8, ***characterized* in that** it comprises at least one of the following layers:
- a layer A made of phenolic resin and fiberglass;
- an adhesive layer B made of copolyamide;
- a layer C made of PVC, advantageously comprising at least some fillers and/or at least one flame retardant agent;
- a layer D made of PETG and/or PET;
- a layer E made of thermoplastic polyurethane, advantageously comprising at least one flame retardant agent.

11. The multilayer floor covering according to one of claims 1 to 10, ***characterized* in that** it has a thickness less than 3.7 mm.

12. The multilayer floor covering according to one of claims 1 to 11, ***characterized* in that** it has a surface density less than or equal to 2.3 kg/m².

13. A method for production of the multilayer floor covering that is the subject of one of the claims 1 to 12, comprising the following steps:
- production of layers A to E;
- assembly of layers A to E.
